# EUROPEAN PATENT SPECIFICATION

(11) **EP 0 796 752 B1**
(45) Date of publication and mention of the grant of the patent: **21.11.2001**
(21) Application number: 97301938.3
(22) Date of filing: 21.03.1997
(51) Int. Cl.: B60H 1/03

(54) **Vehicular heating apparatus**
Fahrzeugheizung
Dispositif de chauffage pour véhicules

(30) Priority: 22.03.1996 JP 6588496; 31.07.1996 JP 20255196; 31.07.1996 JP 20251596
(43) Date of publication of application: 24.09.1997
(73) Proprietor: AISIN SEIKI KABUSHIKI KAISHA, Kariya City Aichi Pref. (JP)
(72) Inventor: Kodama, Hisashi, Kariya city, Aichi pref. (JP); Nagakane, Keisuke, Kariya city, Aichi pref. (JP); Nakai, Yoshitomo, Kariya city, Aichi pref. (JP); Tanaka, Seiya, Kariya city, Aichi pref. (JP); Ogushi, Naoki, Kariya city, Aichi pref. (JP)
(74) Representative: SERJEANTS

(56) References cited:
- EP-A- 0 622 256
- WO-A-94/20321
- WO-A-95/03187
- US-A- 4 993 377

## Description

### BACKGROUND OF THE PRESENT INVENTION

### 1. Field of the present invention

The present invention relates to a vehicular heating apparatus that uses cooling water for an engine, more specifically, to a vehicular heating apparatus wherein a cooling water heating circuit is provided with a heat generator which generates heat by shearing viscous fluid to raise the temperature in a vehicular compartment.

### 2. Description of the Related Art

The present invention has been made in consideration of the fact that heating capacity needs to be increased in starting at low temperature or driving normally in cold areas, when cooling water for an engine is not sufficiently warmed up. As means for improving the heating capacity under such conditions, there is proposed a heating apparatus which is able to raise the cooling water temperature quickly by shearing viscous fluid in a heat generator and transmitting the heat generated therein to cooling water for the engine so that the vehicle compartment is warmed up appropriately.

Throughout this specification, the term "cooling water" is used to refer to water which is normally used to cool a water cooled engine. Although such water has cooling as its primary purpose, it may also be utilized in the heating of the engine or the passenger compartment of a car, when the engine is cold. The present invention is concerned with the heating function of this water. The term "cooling water" is used because this term is traditionally used in the art even when the water is performing a heating function.

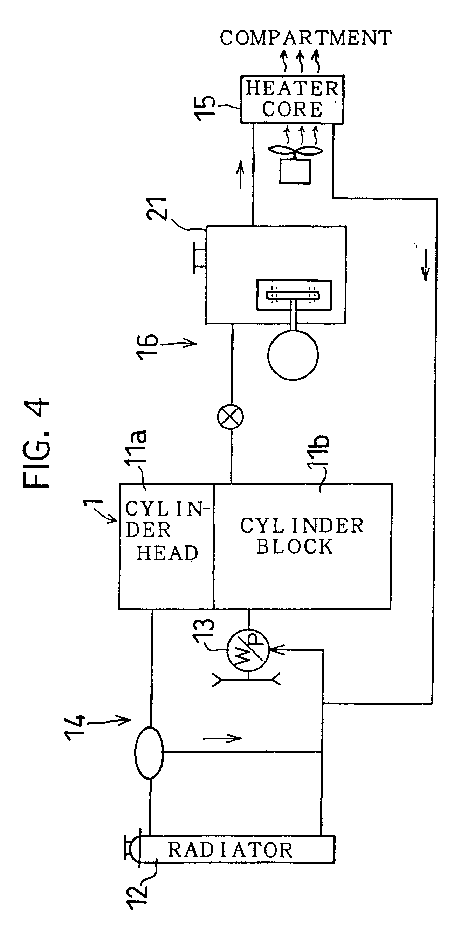

Fig. 4 schematically shows a conventionally employed vehicular heating apparatus in which the heat generator is combined with a cooling water circuit of a water-cooled engine. This conventionally employed apparatus includes a cooling water circuit 14 that forms a circulation system of cooling water. In this case, cooling water flows from a water jacket 11b on the cylinder block side of an engine 1 into a water jacket 11a on the cylinder head side. Then, cooling water flowing through a radiator 12 is urged by a water pump 13 to flow into the water jacket 11b on the cylinder block side. In addition to such circulation system, there is provided a bypass system which causes cooling water to flow from the jacket 11a on the cylinder head side directly into the water pump 13. In a cooling water heating circuit 16, cooling water flows from the water jacket 11b on the cylinder block side though a heat generator 21 and a heater core 15 which functions as a heat exchanger. Then, the cooling water that has reached the cooling water circuit 14 between the radiator 12 and the water pump 13 is caused to flow further into the water jacket 11b on the cylinder block side by the water pump 13.

In starting at low temperature driving normally in cold areas, the vehicular heating apparatus causes a heat generator 21 in the cooling water heating circuit to generate heat so as to heat cooling water independently of combustion heat of the engine. In addition to the heating operation based on the combustion heat of the engine, the vehicular heating apparatus blows hot air from behind the heater core 15, which faces the passenger compartment and operates as a heat exchanger. Thus, the temperature in the compartment is raised quickly.

The heat generator 21 allows the engine temperature to be raised at an early stage by heating cooling water independently of the combustion heat of the engine, thereby improving fuel consumption and preventing unburnt substances from being generated in exhaust gas. Consequently, in the conventional arrangement, the cooling water heating circuit 16 is connected to the cooling water circuit 14 as illustrated in Fig. 4, so that cooling water in the water jacket of the engine flows through both circuits 14 and 16.

However, cooling water passing through the cooling water heating circuit 16 also flows into the water jacket of the engine. Namely, the entire engine cooling water is heated by the heat generator 21. For this reason, the heat generator 21 needs to have a relatively large capacity in order to achieve the desired heating performance. However, the heat generator having such a large capacity occupies a considerably large space in the engine room and causes an increase in the vehicle weight.

An alternative vehicular heating apparatus is disclosed in EP-A1-0622256 in accordance with the preamble of claim 1. The apparatus has a heating circuit which includes a heat generator 7, a heater core 4, an engine water jacket 1 and a thermostat valve 9. The thermostat valve 9 acts as an engine bypass circulation means and selectively switches between a left-hand circuit containing the engine water jacket 1, and a right-hand circuit containing the heat generator 7 and heater core 4. The switching between the left- and right-hand circuits is carried out as a function of temperature.

A further alternative vehicular heating apparatus is disclosed in US-A-4892248. The apparatus has a circulation branch 50 which is connected to an engine 10 and has coolant running through it continuously when the engine 10 and a water pump 14 are in operation. A circulation branch 54 is also provided and includes a heat exchanger 56 and a heat generator 58. The branches 50,54 are connected by a two-way valve 52 which acts as a cooling water heating circuit separating means. When the valve 52 is in a first position the branch 50 is isolated from the branch 54 and when it is in a second position the branch 54 is supplied with fluid from branch 50. The preamble of claim 6 is therefore based on US-A-4892248.

### SUMMARY OF THE PRESENT INVENTION

It is an object of the present invention to provide a vehicular heating apparatus equipped with a heat generator which functions appropriately, even if the heat generator does not have a capacity large enough to heat the entire cooling water for the engine within a short period of time.

It is another object of the present invention to provide a vehicular heating apparatus equipped with a heat generator, which is able to perform heating operation rapidly and sufficiently despite a small capacity thereof, provide an effective auxiliary heating function in the case where the combustion heat of the engine alone is insufficient at the time of normal driving in cold areas, and maintain the temperature of the engine effectively.

It is still another object of the present invention to provide a vehicular heating apparatus wherein a heat generator of a relatively small capacity is able to perform heating operation rapidly and sufficiently without necessitating any other power source except means for driving the heat generator or occupying a large space in the engine room.

The present invention has been made in view of the above-described problems. As defined in claim 1, the present invention provides a vehicular heating apparatus having a cooling water heating circuit, the circuit comprising: a heat generator having a rotor and generating heat by shearing viscous fluid for heating cooling water in the circuit; a heater core for using heated cooling water in the circuit (16) to heat a compartment; a water jacket for an engine; and engine bypass circulation means for selectively causing cooling water to circulate only between the heater core and the heat generator;wherein the engine bypass circulation means includes: a circulation pump having a shaft for causing cooling water flowing from the water jacket or from the heater core to be introduced into the heat generator; and a circulation valve which either returns cooling water flowing from the heater core to the water jacket through a cooling water return pipe of an engine cooling water circuit or bypasses cooling water through a circulation bypass pipe to the circulation pump, said circulation bypass pipe connecting the circulation valve to the circulation pump; CHARACTERIZED IN THAT the heat generator and the circulation pump are driven by one driving source transmitting a rotation to the shaft of the pump which is connected to the rotor of the heat generator.

The engine bypass circulation means may start operating once the heater switch is activated at the time of start, preventing fresh cooling water from entering the cooling water heating circuit from the water jacket. To the contrary, cooling water is caused to circulate only between the heat generator and the heater core. Consequently, it is necessary only to provide the heat generator with a capacity large enough to heat the stemmed cooling water, and to warm up the heater core to a level that is suitable for heating purposes. Furthermore, the heat generator can be made compact in comparison with those having a capacity large enough to heat the entire cooling water within a short period of time as desired.

According to claims 2 to 5 of the present invention, the bypass operation of the engine bypass circulation means is stopped once the cooling water temperature exceeds a predetermined value. In this case, cooling water is caused to circulate between the heater core and the water jacket of the engine while the heat generator is in operation.

Viscous fluid, preferably silicon oil that serves as lubricant may be used as a heat medium. The viscous coefficient of silicon oil can be altered as desired in advance, thus making it possible to set the heating capacity. More specifically, in the case where viscous fluid is used, there is employed a viscous fluid joint which generates heat by shearing viscous fluid in the heat-generating chamber.

According to the present invention as described in claims 2 to 5, when the cooling water temperature exceeds a predetermined value, the bypass operation is stopped by the engine bypass circulation means, while all the other circulating functions are maintained. Thus, cooling water is caused to circulate between the heater core and the water jacket of the engine while the heat generator is in operation. On the other hand, if cooling water is heated to a certain degree, the cooling water temperature can be maintained at a level that provides a sufficient and necessary heating performance, despite a small capacity of the heat generator. Therefore, an auxiliary heating function achieved by the present invention as defined in claims 2 to 5 is effective in the case where combustion heat of the engine alone is insufficient to perform an appropriate heating function when driving in cold areas. Also, the present invention of claims 2 to 5 enables the engine temperature to be maintained effectively.

Furthermore, the present invention of claims 2 to 5 enables a fine adjustment of a heating environment. That is, selection can be made between one heating mode in which cooling water circulates only between the heat generator and the heater core, and the other heating mode in which cooling water circulates between the heater core and the water jacket of the engine while the heat generator is in operation.

As defined in claim 6, the present invention provides a vehicular heating apparatus having a cooling water heating circuit 16, the circuit comprising: a heat generator 21 generating heat by shearing viscous fluid for heating cooling water in the circuit 16; a heater core 15 for using heated cooling water in the circuit 16 to heat a compartment; a water jacket 11 for an engine 1; a cooling water heating circuit separating means 32,33,35,36 for separating the cooling water circuit 16 into an engine side circuit 34 and an engine bypass circuit 10, the engine bypass circuit 10 allowing cooling water to circulate only between the heater core 15 and the heat generator 21, while the engine side circuit 34 introduces cooling water flowing from the water jacket 11 directly back to the water jacket 11; and CHARACTERIZED IN THAT the engine side circuit 34 and the engine bypass circuit 10 include a driving means 37 and a driven means 38 respectively; wherein the driving means 37 and the driven means 38 are coupled together such that cooling water circulating in the engine side circuit 34 drives the driving means 37 which causes the driven means 38 to circulate cooling water in the engine bypass circuit 10.

According to the construction as defined in claim 6 of the present invention, there is provided, for example, a cooling water heating circuit separating means which divides the cooling water heating circuit into the engine bypass circuit and the engine side circuit in starting the engine at low temperature or operating the heat generator. In the engine bypass circuit, cooling water circulates between the heater core and the heat generator, whereas in the engine side circuit, the cooling water forced out of the engine is introduced directly back into the engine. In the engine side circuit, the cooling water forced out of the water jacket by the water pump is directly introduced back into the water pump. Accordingly, if the engine side circuit is provided with a rotor with blades as a driving mechanism and the bypass circuit is provided with the same rotor with blades as a driven mechanism, the power generated in the engine side circuit to drive cooling water is transmitted to the bypass circuit. Thus, cooling water is caused to circulate in the engine bypass circuit. In this manner, it is possible to save a space for the driving source that causes cooling water to circulate in the engine bypass circuit. Besides, it is possible to employ a heater generator having a relatively small capacity suited for heating only part of the entire cooling water, that is, the cooling water flowing through the engine bypass circuit.

Other objects and advantages of the present invention will be explained in the following with reference to the accompanying drawings.

### BRIEF DESCRIPTION OF THE DRAWINGS

Fig. 1 is a schematic diagram showing a vehicular heating apparatus of a first preferred embodiment of the present invention.
Fig. 2 is a schematic diagram showing a vehicular heating apparatus of a second embodiment of the present invention.
Fig 3 is a schematic diagram showing a vehicular heating apparatus of a third embodiment of the present invention.
Fig. 4 is a schematic diagram showing a conventional vehicular heating apparatus.

### DETAILED DESCRIPTION OF THE PREFERRED EMBODIMENTS

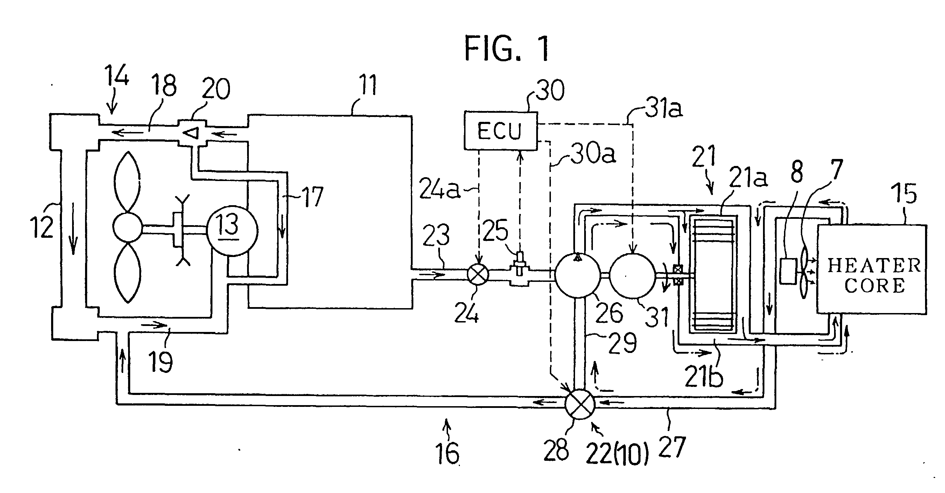

As shown in Fig. 1, a vehicular heating apparatus of the present invention includes a cooling water circuit 14 in which a belt-driven water pump 13 and a radiator 12 are disposed. A cooling front pipe 18 and a thermostat valve 20 are interposed between a water inlet of the radiator 12 and a water jacket 11 of an engine. A cooling water return pipe 19 is provided between a water outlet of the radiator 12 and the water pump 13, and the water pump 13 draws cooling water and introduces it back into the water jacket 11. The thermostat valve 20 provided in the middle of the cooling front pipe 18 and the cooling water return pipe 19 are connected with each other through a cooling bypass pipe 17. The thermostat valve 20 introduces cooling water into the cooling bypass pipe 17 when the cooling water temperature is low, whereas it introduces cooling water into the radiator 12 when the cooling water temperature is high.

A cooling water heating circuit 16 includes a heat dissipating onward pipe 23 and a heat dissipating return pipe 27. Cooling water is forced out of the water jacket 11 of the engine 1 through the heat dissipating onward pipe 23 and fed into a heater core 15. Then, cooling water flows through the heat dissipating return pipe 27 and returns to the water jacket 11. The heat dissipating onward pipe 23 is provided with a valve 24 for shutting off the cooling water flowing from the water jacket 11, a temperature sensor 25 for detecting the cooling water temperature, a circulation pump 26, a heat generator 21 and the heater core 15. The circulation pump 26 constitutes part of the engine bypass circulation means 22 of the present invention. The heat dissipating return pipe 27 is provided with a circulation valve 28. In accordance with the operation state of the circulation valve 28, cooling water either flows from the heater core 15 through the cooling water return pipe 19 into the water jacket 11 or flows through a circulation bypass pipe 29 into the circulation pump 26.

The valve 24 designed to shut off the cooling water flowing from the water jacket 11 is selectively opened or closed in response to a drive signal 24a transmitted from an ECU 30. The ECU 30 determines whether or not the heater switch in the compartment has been operated. The cooling water temperature detected by the temperature sensor 25 is input to the ECU 30.

The heat generator 21 is composed of a heat- generating chamber 21a and a heat-receiving chamber 21b. The heat- generating chamber 21a is filled with viscous fluid such as silicone oil, which is sheared by a rotor that rotates in the heat-generating chamber 21a so as to generate heat. The heat generated in the heat- generating chamber 21a is transmitted to a heat- receiving chamber 21b. Since the heat- receiving chamber 21b is provided in the cooling water heating circuit 16, the generated heat is transmitted to the cooling water flowing therein. The rotor of the heat generator 21 is connected to a driving source 31 such as an electric motor. The driving source 31 is driven in response to a drive signal 31a transmitted from the ECU 30, thus causing the rotor to rotate.

The heat generator 21 has a capacity large enough to heat the stemmed cooling water to a predetermined temperature within a desired period of time. In this case, the stemmed cooling water is caused to circulate only between the heat generator 21 and the heater core 15 by engine bypass circulation means 22, which will be explained later. The capacity of the heat generator 21 is obviously smaller than that of a conventional heat generator, which is designed to heat the entire cooling water flowing through the whole system within a desired period of time. In addition, the heat generator 21 is relatively compact.

In this embodiment, the circulation pump 26 is driven by the driving source 31, thereby causing the heat generator 21 to generate heat. The circulation pump 26 has two suction inlets. One of the suction inlets is connected to a downstream end of the heat- dissipating onward pipe 23, whereas the other is connected to one end of a bypass pipe 29. The other end of the bypass pipe 29 is connected to the circulation valve 28, which constitutes part of the engine bypass circulation means 22. As described above, the heat- dissipating return pipe 27, which constitutes part of the cooling water heating circuit 16, is provided with the circulation valve 28 between the heater core 15 and the cooling water return pipe 19. The circulation valve 28 is selectively opened or closed in response to a drive signal 30a transmitted from the ECU 30, thereby achieving two modes. In one of the modes, the cooling water flowing from the heater core 15 flows through the heat- dissipating return pipe 27 and the bypass pipe 29 into the circulation pump 26. In the other mode, cooling water directly flows into the cooling water return pipe 19 of the cooling water circuit 14. The circulation pump 26 may be driven by a belt that conveys engine revolution.

In this embodiment, the engine bypass circulation means 22 is composed of valve 24, circulation pump 26, circulation valve 28 and bypass pipe 29. Hereinafter, it will be described how the above- described construction operates. As the engine 1 is started and the heater switch is pushed by the driver, the ECU 30 determines that the heater switch has been operated. Then, the drive signal 31a is output by the ECU 30 to operate the driving source 31. If the cooling water temperature as detected by the temperature sensor 25 is below a predetermined value, the drive signal 30a is transmitted to the circulation valve 28 to switch over the valve 28, thereby allowing cooling water in the heat- dissipating return pipe 27 to flow into the bypass pipe 29. On the other hand, the drive signal 24a is output to close the valve 24.

Thus, the cooling water flowing from the water jacket 11 is prevented from entering the circulation pump 26 by the valve 24. On the other hand, the cooling water flowing through the heater core 15 into the heat- dissipating return pipe 27 is introduced into the bypass pipe 29 by the circulation valve 28 without being introduced into the cooling water return pipe 19. Consequently, the cooling water heating circuit 16 is separated from the cooling water circuit 14 that is provided between the water jacket 11 and the radiator 12. As shown by alternate long and short dash lines in Fig. 1, the cooling water forced out of the circulation pump 26 enters the heat- generating chamber 21a to be heated therein. Then, cooling water flows into the heater core 15, through which heat is exchanged between air in the compartment and cooling water. In the bypass circuit 10 thus constructed, cooling water flows from heater core 15 through heat- dissipating return pipe 27, circulation valve 28 and bypass pipe 29 back into circulation pump 26.

The cooling water flowing through the bypass circuit 10 has a relatively small volume. Namely, there is no need to introduce the entire cooling water flowing through the whole system into the bypass circuit 10. Therefore, even if the heat generator 21 has a capacity not large enough to heat the entire cooling water, heating operation can be performed sufficiently within a desired period of time. As the stemmed cooling water is heated quickly, heat is generated in the heater core 15 also quickly. When a blower motor 8 starts operating with a slight delay after the heater switch has been operated, a blower fan 7 starts rotating to provide the compartment with warm air.

The heating operation described above corresponds to a quick heating mode, in which the compartment is heated quickly. The quick heating mode is selected when starting in cold areas. In this mode, the cooling water thus stemmed can be heated easily by the heat generator 21 having a relatively small capacity, and the heater core 15 can be warmed up appropriately. Accordingly, there is no need to provide the heat generator with a capacity large enough to heat the entire cooling water flowing through the whole system within a short period of time.

In the other mode, when the cooling water temperature as detected by the temperature sensor 25 exceeds a predetermined value, the ECU 30 outputs the drive signal 24a to the valve 24 to open the heat-dissipating onward pipe 23. The ECU 30 also outputs the drive signal 30a to switch over the circulation valve 28, thereby causing cooling water in the heat-dissipating return pipe 27 to flow into the cooling water return pipe 19. In this manner, cooling water is caused to circulate between the heater core 15 and the water jacket 11, as indicated by solid arrows.

The above- described heating mode achieves an auxiliary heating function, which is effective when the combustion heat of the engine alone in driving normally in cold areas is insufficient to perform a heating operation appropriately. In this heating mode, the engine temperature is maintained effectively.

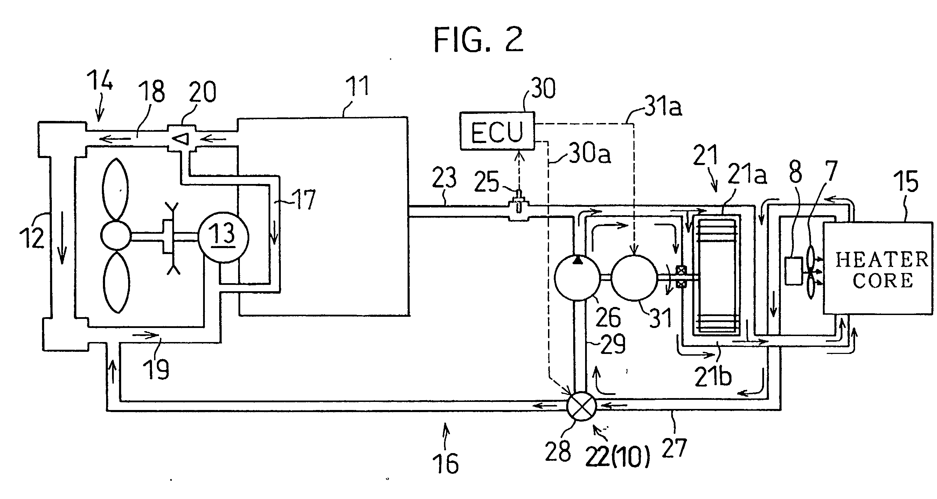

Referring to Fig. 2, a second embodiment of the present invention will be explained. As shown in Fig. 2, a much simplified construction is realized in this embodiment, wherein the heat-dissipating onward pipe 23 is not provided with the valve 24 of the first embodiment. Namely, it is only the temperature sensor 25 that is provided along the heat- dissipating onward pipe 23. One end of the heat- dissipating onward pipe 23 is connected to the water jacket 11 of the engine , while the other ends thereof are connected to an outlet of the water pump 26 and an inlet of the heat- receiving chamber 21a respectively. The second embodiment is constructed substantially in the same way as the first embodiment in terms of all the other details.

According to the above-described construction, when the engine is started and the heater switch in the compartment is operated to switch over the circulation valve 28 to allow the cooling water flowing from the heater core 15 to be introduced into the bypass pipe 29, a substantially closed water circuit is obtained, although the cooling water flowing through the heat generator 21 and the heater core 15 is not completely stemmed. That is, the cooling water forced out of the water pump 26 is introduced not into the heat-dissipating onward pipe 23 but into the heat generator 21, thereby achieving the same circulation route as of the first embodiment.

Thus, the engine bypass circulation means 22 as a closed circuit can be composed solely of the heat generator 21 and the circulation valve 28.

It is to be noted that the present invention is not limited to any specific construction of the above- described embodiments. For example, the driving source for driving the heat generator 21 may be a hydraulic motor that is driven with the aid of power transmitted from a vehicular hydraulic circuit, which is conventionally existent. In this case, the heat generator 21 and the water pump 26 do not cause any exasperating noise.

Alternatively, the water pump 26 may be used as a driving source for driving the heat generator 21. In this case, the water pump 26, which is driven by a belt that transmits engine revolution, is provided with a rotational shaft connected through an electromagnetic clutch to a rotor of the heat generator 21.

The engine bypass circulation means 22, that is, the water pump 26 and the circulation valve 28 can be switched over without using the ECU.

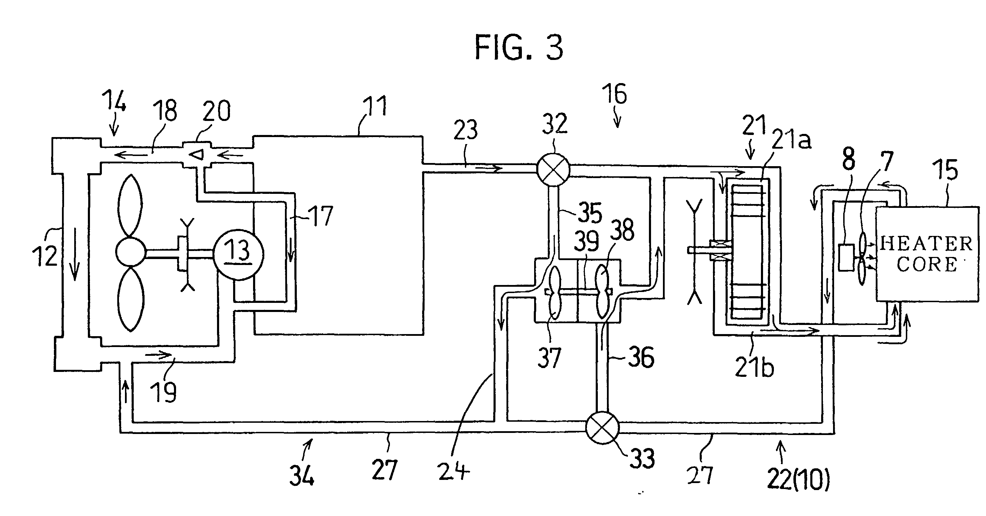

Fig. 3 shows a third embodiment of the vehicular heating apparatus, in which a water-cooled engine is also employed. This water-cooled engine is provided with a cooling water circuit, which is completely identical to the circuit 14 as shown in Figs. 1 and 2. Therefore, it will not be described in any further detail.

The cooling water heating circuit 16 includes the heat- dissipating onward pipe 23 and the heat- dissipating return pipe 27. The cooling water forced out of the water jacket 11 is introduced into the heater core 15 through the heat- dissipating onward pipe 23. After passing through the heater core 15, cooling water is introduced back into the water jacket 11 through the heat-dissipating return pipe 27. The heat-dissipating onward pipe 23 has a first switching valve 32 and the heat generator 21. By means of the first switching valve 32, cooling water is selectively introduced either into the heat generator 21 or into a heat- dissipating downstream pipe 24 through a first short- circuit pipe 35. On the other hand, the heat-dissipating return pipe 27 is provided with a second switching valve 33, which selectively introduces cooling water either into the heat generator 21 through a second short-circuit pipe 36 or into the water jacket 11 through the cooling water return pipe 19.

The first short-circuit pipe 35, which branches from the first valve 32, is in communication with the heat-dissipating return pipe 27 between the second switching valve 33 and the cooling water return pipe 19. The second short- circuit pipe 36, which branches from the second switching valve 33, is in communication with the heat- dissipating onward pipe 23 between the heat generator 21 and the first switching valve 32. The first and second switching valves 32, 33 constitute cooling water route separating means, which is controlled in response to instructions given by the ECU, though not illustrated herein. When the first and second switching valves 32, 33 are switched over to introduce cooling water into the first and second short- circuit pipes 35, 36 respectively, the cooling water heating circuit 16 is divided into an engine side circuit 34 and an engine bypass circuit 10. The engine side circuit 34 includes water jacket 11, heat-dissipating onward pipe 23, first switching valve 32, first short-circuit pipe 35, heat- dissipating return pipe 27, cooling water return pipe 19 and water pump 13. On the other hand, the engine bypass circuit 10 includes heat generator 21, heater core 15, heat-dissipating return pipe 27, second switching valve 33, second short- circuit pipe 36, heat-dissipating onward pipe 23 and heat generator 21. A rotor of the heat generator 21 is caused to rotate, for example, by a belt that transmits engine revolution.

The first and second short-circuit pipes 35, 36 are provided with rotors 37, 38 respectively. Both the rotors 37, 38 are equipped with blades and constructed substantially identically. Also, there is a common rotational shaft 39 provided to support both the rotors 37, 38 thereon. When the water pump 13 causes cooling water to circulate through the engine side circuit 34, the rotor 37 operates as a driving mechanism for driving the rotor 38. In this manner, cooling water is caused to circulate in the engine bypass circuit 10.

As hitherto described, in this embodiment, the cooling water route separating means is composed of first switching valve 32, second switching valve 33, first short- circuit pipe 35 and second short-circuit pipe 36.

When the engine 1 is started and the heater switch in the compartment is pushed by a driver, the first and second switching valves 32, 33 are switched over in response to instructions given by the ECU to introduce cooling water into the first and second short-circuit pipes 35, 36 respectively. Thus, the cooling water heating circuit 16 is divided into the engine side circuit 34 and the engine bypass circuit 10. In the engine side circuit 34, cooling water forced out of the water pump 13 flows into the first short-circuit pipe 35 as shown by an arrow, causes the rotor 37 to rotate, and returns to the heat-dissipating return pipe 27. Since the first and second rotors 37, 38 are supported on the common rotational shaft 39, the second rotor 38 is caused to rotate by the rotating movement of the first rotor 37. Accordingly, due to the second switching valve 33 that communicates the second short-circuit pipe 36 and the heater core 15 with each other, cooling water flows in the engine bypass circuit 10, as shown by arrows, from the heater core 15 through the second short-circuit pipe 36 into the heat generator 21. Thus, cooling water in the engine bypass circuit 10 is warmed up.

Since it is unnecessary to cause the entire cooling water to circulate in this bypass circuit, heating operation can be performed sufficiently within a short period of time as desired, even with a heat generator whose capacity is not large enough to heat the entire cooling water. The cooling water thus stemmed is heated quickly, thereby allowing the heater core 15 to generate heat. When the blower motor 8 starts operating with a slight delay after the heater switch has been operated, the blower fan 7 starts rotating to provide the compartment with warm air, thereby raising the temperature in the compartment quickly. The heat generator 21 has a small capacity and volume unlike the conventionally employed heat generator that is designed to heat the entire cooling water to a predetermined temperature within a desired period of time.

As described above, the cooling water forced out of the water pump 13 circulates in the engine side circuit 34. The first rotor 37 is caused to rotate by the cooling water thus circulating, and the second rotor 38 that is supported on the common rotational shaft 39 is also urged to rotate, thereby causing cooling water to circulate in the engine bypass circuit 10. This construction provides a low-cost power transmission mechanism and eliminates the necessity of providing a separate water pump that utilizes engine power. Therefore, the power transmission mechanism thus simplified, together with the heat generator of a small capacity, achieves significant reduction in space and cost.

As shown in Fig. 3, cooling water flows in one direction in the first short-circuit pipes 35 and flows in the other direction in the second short-circuit pipe 36. It should be noted, however, that this is merely a matter of arrangement. Namely, cooling water may flow in the same direction both in the first and second short- circuit pipes 35, 36. In the case of the embodiment described herein, the blades of the first and second rotors 37, 38 are mutually inverted in shape.

When cooling water is heated beyond a predetermined temperature, the ECU is activated. The first switching valve 32 is thereby switched over such that the cooling water flowing from the water jacket 11 is not introduced into the first short-circuit pipe 35 but into the heat generator 21, while the second switching valve 33 is switched over such that the cooling water flowing from the heater core 15 is not introduced into the second short-circuit pipe 36 but into the cooling water return pipe 19. In this case, cooling water circulates in the cooling water heating circuit 16 that is composed of water jacket 11, heat-dissipating onward pipe 23, heat generator 21, heater core 15 and heat- dissipating return pipe 27. Thus, the normal heating mode is achieved.

An effective auxiliary heating function is presented by this normal heating mode, especially in the case where the combustion heat of the engine alone is insufficient to perform an appropriate heating operation at the time of normal driving in cold areas. In addition, the engine temperature can be maintained appropriately.

Further to the above―described embodiments, in the case where a hydraulic motor is employed as a driving source for driving the heat generator 21, the hydraulic motor may be driven by utilizing power transmitted from any hydraulic circuit conventionally present in the vehicle. In addition to a significantly improved tranquillity of the heat generator 21, such construction is advantageous in that the hydraulic motor does not necessitate a large amount of motive power, especially because cooling water is caused to flow through the short-circuit pipes by a tandem-type power transmission mechanism. Moreover, the first and second switching valves 32, 33 may be switched over directly by the driver in the compartment, namely, without relying on the ECU.

## Claims

1. A vehicular heating apparatus having a cooling water heating circuit (16), the circuit comprising:
a heat generator (21) having a rotor and generating heat by shearing viscous fluid for heating cooling water in the circuit (16);
a heater core (15) for using heated cooling water in the circuit (16) to heat a compartment;
a water jacket (11) for an engine (1); and
engine bypass circulation means (22) for selectively causing cooling water to circulate only between the heater core (15) and the heat generator (21);
wherein the engine bypass circulation means (22) includes:
a circulation pump (26) having a shaft for causing cooling water flowing from the water jacket (11) or from the heater core (15) to be introduced into the heat generator (21); and
a circulation valve (28) which either returns cooling water flowing from the heater core (15) to the water jacket (11) through a cooling water return pipe (19) of an engine cooling water circuit (14) or bypasses cooling water through a circulation bypass pipe (29) to the circulation pump (26), said circulation bypass pipe (29) connecting the circulation valve (28) to the circulation pump (26);
**CHARACTERIZED IN THAT** the heat generator (21) and the circulation pump (26) are driven by one driving source transmitting a rotation to the shaft of the pump (26) which is connected to the rotor of the heat generator (21).

2. A vehicular heating apparatus according to claim 1, wherein said engine bypass circulating means (22) is designed to cause cooling water to circulate between said heater core (15) and the water jacket (11) of the engine during the operation of said heat generator (21) when the cooling water temperature exceeds a predetermined value.

3. A vehicular heating apparatus according to claim 1 or claim 2, wherein said cooling water heating circuit (16) further includes cooling water temperature detecting means (25) and a control unit (30);
said control unit (30) determines whether a heater switch has been turned on or off;
if the heater switch has been turned on and the temperature detected by said cooling water temperature detecting means is below a predetermined value:
said control unit (30) drives said heat generator (21) and said circulation pump (26) and switches over the circulation valve (28) to allow cooling water flowing from the heater core (15) to be bypassed through the circulation bypass pipe (29) into the circulation pump (26); and
if the heater switch has been turned on and the temperature detected by said cooling water temperature detecting means exceeds the predetermined value:
said control unit (30) switches over the circulation valve (28) to introduce cooling water flowing from the heater core (15) back into the water jacket (11) through the cooling water return pipe (19) of the cooling water circuit (14).

4. A vehicular heating apparatus according to claim 1, wherein the engine bypass circulation means (22) further includes a valve (24) for shutting off cooling water flowing from the water jacket (11);

5. A vehicular heating apparatus according to claim 4, wherein said cooling water heating circuit (16) further includes cooling water temperature detecting means (25) and a control unit (30);
said control unit (30) determines whether a heater switch has been turned on or off;
if the heater switch has been turned on and the temperature detected by the temperature detecting means (25) is below a predetermined value:
said control unit (30) activates a driving source to drive said heat generator (21) and said circulation pump (26), closes the valve (24) to shut off cooling water flowing from the water jacket (11), and switches over the circulation valve (28) to allow cooling water that flows from the heater core (15) to be bypassed through the circulation bypass pipe (29) into the circulation pump (26); and
if the heater switch has been turned on and the temperature detected by said cooling water temperature detecting means exceeds the predetermined value:
said control unit (30) opens the valve (24) to introduce cooling water flowing from the water jacket (11) into the circulation pump (26) and performs switch-over operation to return cooling water flowing from the heater core (15) through the cooling water return pipe (19) of the cooling water circuit (14) to the water jacket (11).

6. A vehicular heating apparatus having a cooling water heating circuit (16), the circuit comprising:
a heat generator (21) generating heat by shearing viscous fluid for heating cooling water in the circuit (16);
a heater core (15) for using heated cooling water in the circuit (16) to heat a compartment;
a water jacket (11) for an engine (1);
a cooling water heating circuit separating means (32,33,35,36) for separating the cooling water circuit (16) into an engine side circuit (34) and an engine bypass circuit (10), the engine bypass circuit (10) allowing cooling water to circulate only between the heater core (15) and the heat generator (21), while the engine side circuit (34) introduces cooling water flowing from the water jacket (11) directly back to the water jacket (11); and
**CHARACTERIZED IN THAT** the engine side circuit (34) and the engine bypass circuit (10) include a driving means (37) and a driven means (38) respectively;
wherein the driving means (37) and the driven means (38) are coupled together such that cooling water circulating in the engine side circuit (34) drives the driving means (37) which causes the driven means (38) to circulate cooling water in the engine bypass circuit (10).

7. A vehicular heating apparatus according to claim 6, wherein the driving means comprises a driving rotor with blades (37), and the driven means comprises a driven rotor with blades (38) to which rotation of said driving rotor (37) is transmitted.

8. A vehicular heating apparatus according to claim 6 or claim 7, wherein said cooling water route separating means comprises:
a first switching valve (32) which selectively introduces cooling water flowing from the water jacket (11) into the heat generator (21) or through a first short-circuit pipe (35) into a heat-dissipating return pipe (27) from the heater core (15);
a second switching valve (32) which selectively introduces cooling water from the heater core (15) into the heat generator (21) through a second short-circuit pipe (36) or back into the water jacket (11) through a cooling water return pipe (19);
said first short-circuit pipe (35) branching from the first switching valve (32) back into the heat-dissipating return pipe (27) between the second switching valve (33) and the cooling water return pipe (19); and
said second short-circuit pipe (36) branching from the second switching valve (33) back into the heat-dissipating onward pipe (23) between the first switching valve (32) and the heat generator (21).

9. A vehicular heating apparatus according to any of claims 6 to 8, wherein:
said apparatus includes cooling water temperature detecting means and a control unit (30);
said control unit (30) determines whether a heater switch has been turned on or off;
if the heater switch has been turned on and the temperature detected by said cooling water detecting means is below a predetermined value;
said control unit (30) switches over the first and second switching valves (32,33) to introduce cooling water into the first and second short-circuit pipes (35,36) and divide the cooling water heating circuit (16) into the engine side circuit (34) and the bypass circuit (10);
and if the temperature detected by said cooling water detecting means exceeds the predetermined value:
said control unit (30) switches over the first switching valve (32) to introduce cooling water flowing from the water jacket (11) not into the first short-circuit pipe (35) but into the heat generator (21) and switches over the second switching valve (33) to introduce cooling water from the heater core (15) not into the second short-circuit pipe (36) but into the cooling water return pipe (19) of the cooling water circuit (14);
said engine side circuit (34) includes the water jacket (11) of the engine, the heat-dissipating onward pipe (23), the first switching valve (32), the first short-circuit pipe (35), the heat-dissipating return pipe (27), the cooling water return pipe (19) and the water pump (13); and
said bypass circuit (10) allows cooling water to flow from the heat generator (21) through the heater core (15), the heat-dissipating return pipe (27), the second switching valve (33), the second short-circuit pipe (36) and the heat-dissipating onward pipe (23) back into the heat generator (21).

10. A vehicular heating apparatus according to any preceding claim wherein the heat generator produces heat by causing a viscous medium to flow and thereby to generate heat.

## Patentansprüche

1. Fahrzeugheizvorrichtung mit einem Kühlwasserheizkreislauf (16), wobei der Kreislauf folgendes aufweist:
einen Wärmeerzeuger (21), der einen Rotor hat und Wärme durch Scheren eines viskosen Fluids zum Erwärmen von Kühlwasser in dem Kreislauf (16) erzeugt;
einen Heizkern (15) zum Verwenden des erwärmten Kühlwassers in dem Kreislauf (16) zum Heizen eines Wagenabteils;
einen Wassermantel (11) für einen Motor (1); und
ein Motorumleitungszirkulationsmittel (22) zum wahlweisen Verursachen, dass das Kühlwasser nur zwischen dem Heizkern (15) und dem Wärmeerzeuger (21) zirkuliert;
wobei das Motorumleitungszirkulationsmittel (22) folgendes aufweist:
eine Zirkulationspumpe (26), die eine Welle hat, um zu verursachen, dass das Kühlwasser, das aus dem Wassermantel (11) oder aus dem Heizkern (15) strömt, in den Wärmeerzeuger (21) eingeführt wird; und
ein Zirkulationsventil (28), das Kühlwasser, das aus dem Heizkern (15) strömt, entweder zu dem Wassermantel (11) durch ein Kühlwasserrückführrohr (19) eines Motorkühlwasserkreislaufs (14) zurückführt oder Kühlwasser durch ein Zirkulationsumleitungsrohr (29) zu der Zirkulationspumpe (26) umleitet, wobei das Zirkulationsumleitungsrohr (29) das Zirkulationsventil (28) mit der Zirkulationspumpe (26) verbindet;
**dadurch gekennzeichnet, dass**
der Wärmeerzeuger (21) und die Zirkulationspumpe (26) durch eine Antriebsquelle angetrieben werden, die eine Drehung auf die Welle der Pumpe (26) überträgt, die mit dem Rotor des Wärmeerzeugers (21) verbunden ist.

2. Fahrzeugheizvorrichtung gemäß Anspruch 1, wobei das Motorumleitungszirkulationsmittel (22) ausgelegt ist, um zu verursachen, dass Kühlwasser zwischen dem Heizkern (15) und dem Wassermantel (11) des Motors während des Betriebs des Wärmeerzeugers (21) zirkuliert, wenn die Kühlwassertemperatur einen vorbestimmten Wert übersteigt.

3. Fahrzeugheizvorrichtung gemäß Anspruch 1 oder 2, wobei der Kühlwasserheizkreislauf (16) des weiteren ein Kühlwassertemperaturerfassungsmittel (25) und eine Regeleinheit (30) aufweist;
wobei die Regeleinheit (30) ermlttelt, ob ein Heizungsschalter ein- oder ausgeschaltet wurde;
wobei, wenn der Heizungsschalter eingeschaltet wurde und die Temperatur, die durch das Kühlwassertemperaturerfassungsmittel erfasst ist, unterhalb eines vorbestimmten Werts liegt:
die Regeleinheit (30) den Wärmeerzeuger (21) und die Zirkulationspumpe (26) antreibt sowie das Zirkulationsventil (28) umschaltet, um zu gestatten, dass Kühlwasser, das aus dem Heizkern (15) strömt, durch das Zirkulationsumleitungsrohr (29) in die Zirkulationspumpe (26) umgeleitet wird; und
wobei, wenn der Heizungsschalter eingeschaltet wurde und die Temperatur, die durch das Kühlwassertemperaturerfassungsmittel erfasst ist, einen vorbestimmten Wert übersteigt:
die Regeleinheit (30) das Zirkulationsventil (28) umschaltet, um Kühlwasser, das aus dem Heizkern (15) strömt, zurück in den Wassermantel (11) durch das Kühlwasserrückführrohr (19) des Kühlwasserkreislaufs (14) einzuführen.

4. Fahrzeugheizvorrichtung gemäß Anspruch 1, wobei das Motorumleitungszirkulationsmittel (22) des weiteren ein Ventil (24) zum Absperren des Kühlwassers, das aus dem Wassermantel (11) strömt, aufweist.

5. Fahrzeugheizvorrichtung gemäß Anspruch 4, wobei der Kühlwasserheizkreislauf (16) des weiteren ein Kühlwassertemperaturerfassungsmittel (25) und eine Regeleinheit (30) aufweist;
wobei die Regeleinheit (30) ermittelt, ob ein Heizungsschalter ein- oder ausgeschaltet wurde;
wobei, wenn der Heizungsschalter eingeschaltet wurde und die Temperatur, die durch das Temperaturerfassungsmittel (25) erfasst ist, unterhalb eines vorbestimmten Werts liegt:
die Regeleinheit (30) die Antriebsquelle aktiviert, um den Wärmeerzeuger (21) und die Zirkulationspumpe (26) anzutreiben, das Ventil (24) schließt, um das Kühlwasser, das aus dem Wassermantel (11) strömt, abzusperren, und das Zirkulationsventil (28) umschaltet, um zu gestatten, dass Kühlwasser, das aus dem Heizkern (15) strömt, durch das Zirkulationsumleitungsrohr (29) in die Zirkulationspumpe (26) umgeleitet wird; und
wobei, wenn der Heizungsschalter eingeschaltet wurde und die Temperatur, die durch das Kühlwassertemperaturerfassungsmittel erfasst ist, den vorbestimmten Wert übersteigt:
die Regeleinheit (30) das Ventil (24) öffnet, um Kühlwasser, das aus dem Wassermantel (11) strömt, in die Zirkulationspumpe (26) einzuführen, und den Schaltbetrieb zum Rückführen von Kühlwasser, das aus dem Heizkern (15) strömt, durch das Kühlwasserrückführrohr (19) des Kühlwasserkreislaufs (14) zu dem Wassermantel (11) durchführt.

6. Fahrzeugheizvorrichtung, die einen Kühlwasserheizkreislauf (16) hat, wobei der Kreislauf folgendes aufweist:
einen Wärmeerzeuger (21), der Wärme durch Scheren von einem viskosen Fluid zum Erwärmen von Kühlwasser in dem Kreislauf (16) erzeugt;
einen Heizkern (15) zum Verwenden des erwärmten Kühlwassers in dem Kreislauf (16) zum Heizen eines Wagenabteils;
einen Wassermantel (11) für einen Motor (1);
ein Kühlwasserheizkreislauftrennmittel (32, 33, 35, 36) zum Trennen des Kühlwasserkreislaufs (16) in einen motorseitigen Kreislauf (34) und einen Motorumleitungskreislauf (10), wobei der Motorumleitungskreislauf (10) gestattet, dass Kühlwasser nur zwischen dem Heizkern (15) und dem Wärmeerzeuger (21) zirkuliert, während der motorseitige Kreislauf (34) Kühlwasser, das aus dem Wassermantel (11) strömt, direkt zu dem Wassermantel (11) einführt; und
**dadurch gekennzeichnet, dass**
der motorseitige Kreislauf (34) und der Motorumleitungskreislauf (10) ein Antriebsmittel (37) bzw. ein Abtriebsmittel (38) aufweisen;
wobei das Antriebsmittel (37) und das Abtriebsmittel (38) miteinander so gekoppelt sind, dass Kühlwasser, das in dem motorseitigen Kreislauf (34) zirkuliert, das Antriebsmittel (37) antreibt, welches verursacht, dass das Abtriebsmittel (38) Kühlwasser in dem Motorumleitungskreislauf (10) zirkuliert.

7. Fahrzeugheizvorrichtung gemäß Anspruch 6, wobei das Antriebsmittel einen Antriebsrotor mit Blättern (37) aufweist, und wobei das Abtriebsmittel einen angetriebenen Rotor mit Blättern (38) aufweist, auf die die Rotation des Antriebsrotors (37) übertragen wird.

8. Fahrzeugheizvorrichtung gemäß Anspruch 6 oder 7, wobei das Kühlwasserverlaufstrennmittel folgendes aufweist:
ein erstes Schaltventil (32), das Kühlwasser, das aus dem Wassermantel (11) strömt, wahlweise in den Wärmeerzeuger (21) oder durch ein erstes Kurzschlusskreislaufrohr (35) in ein Wärmedissipations-Rückführrohr (27) aus dem Heizkern (15) einführt;
ein zweites Schaltventil (32), das Kühlwasser aus dem Heizkern (15) wahlweise in den Wärmeerzeuger (21) durch ein zweites Kurzschlusskreislaufrohr (36) oder zurück in den Wassermantel (11) durch ein Kühlwasserrückführrohr (19) einführt;
wobei das erste Kurzschlusskreislaufrohr (35) sich von dem ersten Schaltventil (32) zurück in das Wärmedissipations-Rückführrohr (27) zwischen dem zweiten Schaltventil (33) und dem Kühlwasserrückführrohr (19) abzweigt; und
wobei das zweite Kurzschlusskreislaufrohr (36) sich von dem zweiten Schaltventil (33) zurück in das weitere Wärmedissipations-Rohr (23) zwischen dem ersten Schaltventil (32) und dem Wärmeerzeuger (21) abzweigt.

9. Fahrzeugheizvorrichtung gemäß einem der Ansprüche 6 bis 8, wobei
die Vorrichtung ein Kühlwassertemperaturerfassungsmittel und eine Regeleinheit (30) aufweist;
die Regeleinheit (30) ermittelt, ob ein Heizungsschalter ein- oder ausgeschaltet wurde;
wobei, wenn der Heizungsschalter eingeschaltet wurde und die Temperatur, die durch das Kühlwassererfassungsmittel erfasst ist, unterhalb eines vorbestimmten Werts liegt;
die Regeleinheit (30) das erste und das zweite Schaltventil (32, 33) umschaltet, um Kühlwasser in das erste und das zweite Kurzschlusskreislaufrohr (35, 36) einzuführen und den Kühlwasserheizkreislauf (16) in den motorseitigen Kreislauf (34) und den Umleitungskreislauf (10) zu teilen;
und wobei, wenn die Temperatur, die durch das Kühlwassererfassungsmittel erfasst ist, den vorbestimmten Wert übersteigt:
die Regeleinheit (30) das erste Schaltventil (32) umschaltet, um Kühlwasser, das aus dem Wassermantel (11) strömt, nicht in das erste Kurzschlusskreislaufrohr (35), sondern in den Wärmeerzeuger (21) einzuführen, und schaltet das zweite Schaltventil (33) um, um Kühlwasser aus dem Heizkern (15) nicht in das zweite Kurzschlusskreislaufrohr (36), sondern in das Kühlwasserrückführrohr (19) des Kühlwasserkreislaufs (14) einzuführen;
wobei der motorseitige Kreislauf (34) den Wassermantel (11) des Motors, das weitergehende Wärmedissipations-Rohr (23), das erste Schaltventil (32), das erste Kurzschlusskreislaufrohr (35), das Wärmedissipations-Rückführrohr (27), das Kühlwasserrückführrohr (19) und die Wasserpumpe (13) einschließt; und
wobei der Umleitungskreislauf (10) gestattet, dass Kühlwasser aus dem Wärmeerzeuger (21) durch den Heizkern (15), das Wärmedissipations-Rückführrohr (27), das zweite Schaltventil (33), das zweite Kurzschlusskreislaufrohr (36) und das weitergehende Wärmedissipations-Rohr (23) zurück in den Wärmeerzeuger (21) strömt.

10. Fahrzeugheizvorrichtung gemäß einem der vorherigen Ansprüche, wobei der Wärmeerzeuger Wärme dadurch erzeugt, dass er verursacht, dass ein viskoses Medium strömt und dadurch Wärme erzeugt.

## Revendications

1. Un dispositif de chauffage pour véhicules ayant un circuit de chauffage d'eau de refroidissement (16), le circuit comprenant :
un générateur de chaleur (21) équipé d'un rotor et générant la chaleur en cisaillant un fluide visqueux pour chauffer l'eau de refroidissement dans le circuit (16) ;
un radiateur de chauffage (15) pour utiliser l'eau de refroidissement chauffée dans le circuit (16) afin de chauffer un compartiment ;
une chemise d'eau (11) pour un moteur (1) ; et
des moyens de circulation par contournement du moteur (22) pour amener sélectivement l'eau de refroidissement à circuler uniquement entre le radiateur de chauffage (15) et le générateur de chaleur (21) ;
dans lequel le moyen de circulation par contournement du moteur (22) comprend :
une pompe de circulation (26) équipé d'un arbre pour amener l'eau de refroidissement provenant de la chemise d'eau (11) ou du radiateur de chauffage (15) à pénétrer dans le générateur de chaleur (21) ; et
une vanne de circulation (28) qui soit renvoie l'eau de refroidissement provenant du radiateur de chauffage (15) à la chemise d'eau (11) en passant par un tuyau de retour d'eau de refroidissement (19) d'un circuit d'eau refroidissement de moteur(14) soit dévie l'eau de refroidissement par un tuyau de contournement de circulation(29) vers une pompe de circulation (26), le dit tuyau de contournement de circulation (29) reliant la vanne de circulation (28) à la pompe de circulation (26) ;
**CARACTÉRISÉ EN CE QUE** le générateur de chaleur (21) et la pompe de circulation (26) sont entraînés par une seule source d'entraînement transmettant la rotation à l'arbre de la pompe (26) qui est relié au rotor du générateur de chaleur (21).

2. Un dispositif de chauffage pour véhicules selon la revendication 1, dans lequel ledit moyen de circulation par contournement du moteur (22) est conçu pour amener l'eau de refroidissement à circuler entre ledit radiateur de chauffage (15) et la chemise d'eau (11) du moteur pendant le fonctionnement du dit générateur de chaleur (21) lorsque la température de l'eau de refroidissement dépasse une valeur prédéterminée.

3. Un dispositif de chauffage pour véhicules selon la revendication 1 ou la revendication 2, dans lequel ledit circuit de chauffage d'eau de refroidissement (16) comprend en outre un moyen de détection de la température d'eau de refroidissement (25) et une unité de commande (30) ;
ladite unité de commande (30) détermine si un commutateur de chauffage a été activé ou désactivé ;
si le commutateur de chauffage a été activé et si la température détectée par ledit moyen de détection de la température d'eau de refroidissement est inférieure à une valeur prédéterminée :
ladite unité de commande (30) commande ledit générateur de chaleur (21) et ladite pompe de circulation (26) et commute la vanne de circulation (28)pour permettre que l'eau de refroidissement provenant du radiateur de chauffage (15) soit déviée par le tuyau de contournement de circulation (29) pour pénétrer dans la pompe de circulation (26) ; et
si le commutateur de chauffage a été activé et si la température détectée par ledit moyen de détection de la température d'eau de refroidissement est supérieure à la . valeur prédéterminée :
ladite unité de commande (30) commute la vanne de circulation (28) pour renvoyer dans la chemise d'eau (11) l'eau de refroidissement provenant du radiateur de chauffage (15) en passant par le tuyau de retour d'eau de refroidissement (19) du circuit d'eau refroidissement (14) ;

4. Un dispositif de chauffage pour véhicules selon la revendication 1, dans lequel le moyen de circulation par contournement du moteur (22) comprend en outre une vanne (24) pour couper l'eau de refroidissement provenant de la chemise d'eau (11) ;

5. Un dispositif de chauffage pour véhicules selon la revendication 4, dans lequel ledit circuit de chauffage d'eau de refroidissement (16) comprend en outre un moyen de détection de la température d'eau de refroidissement (25) et une unité de commande (30) ;
ladite unité de commande (30) détermine si un commutateur de chauffage a été activé ou désactivé ;
si le commutateur de chauffage a été activé et si la température détectée par le moyen de détection de température (25) est inférieure à une valeur prédéterminée :
ladite unité de commande (30) active une source d'entraînement pour commander ledit générateur de chaleur (21) et ladite pompe de circulation (26), ferme la vanne (24) pour couper l'eau de refroidissement provenant de la chemise d'eau (11), et commute la vanne de circulation (28) pour permettre que l'eau de refroidissement provenant du radiateur de chauffage (15) soit déviée par le tuyau de contournement de circulation (29) pour pénétrer dans la pompe de circulation (26) ; et
si le commutateur de chauffage a été activé et si la température détectée par ledit moyen de détection de la température d'eau de refroidissement est supérieure à la valeur prédéterminée :
ladite unité de commande (30) ouvre la vanne (24) pour introduire dans la pompe de circulation (26) l'eau de refroidissement provenant de la chemise d'eau (11) et procède à une commutation pour renvoyer dans la chemise d'eau (11) l'eau de refroidissement provenant du radiateur de chauffage (15) en passant par le tuyau de retour d'eau de refroidissement (19) du circuit d'eau refroidissement (14) ;

6. Un dispositif de chauffage pour véhicules ayant un circuit de chauffage d'eau de refroidissement (16), le circuit comprenant :
un générateur de chaleur (21) générant la chaleur en cisaillant un fluide visqueux pour chauffer l'eau de refroidissement dans le circuit (16) ;
un radiateur de chauffage (15) pour utiliser l'eau de refroidissement chauffée dans le circuit (16) afin de chauffer un compartiment ;
une chemise d'eau (11) pour un moteur (1) ;
des moyens de séparation de circuits de chauffage d'eau de refroidissement (32, 33, 35, 36) pour diviser le circuit d'eau de refroidissement (16) en un circuit côté moteur (34) et en un circuit de contournement du moteur (10), le circuit de contournement du moteur (10) permettant à l'eau de refroidissement de circuler uniquement entre le radiateur de chauffage (15) et le générateur de chaleur (21), tandis que le circuit côté moteur (34) renvoie directement dans la chemise d'eau (11) l'eau de refroidissement provenant de la chemise d'eau (11) ; et
**CARACTÉRISÉ EN CE QUE** le circuit côté moteur (34) et le circuit de contournement du moteur (10) comprennent respectivement un moyen d'entraînement (37) et un moyen entraîné (38) ;
dans lequel le moyen d'entraînement (37) et le moyen entraîné (38) sont couplés ensemble de telle manière que l'eau de refroidissement circulant dans le circuit côté moteur (34) entraîne le moyen d'entraînement (37) qui amène le moyen entraîné (38) à faire circuler l'eau de refroidissement dans le circuit de contournement du moteur (10).

7. Un dispositif de chauffage pour véhicules selon la revendication 6, dans lequel le moyen d'entraînement comprend un rotor mâle à pales (37), et le moyen entraîné comprend un rotor commandé à pales (38) auquel la rotation du dit rotor mâle (37) est transmise.

8. Un dispositif de chauffage pour véhicules selon la revendication 6 ou la revendication 7, dans lequel ledit moyen de séparation des voies d'acheminement de l'eau de refroidissement comprend :
une première vanne de commutation (32) qui introduit sélectivement l'eau de refroidissement provenant de la chemise d'eau (11) soit dans le générateur de chaleur (21) soit, par un premier tuyau de court-circuit (35), dans le tuyau retour de dissipation de chaleur (27) partant du radiateur de chauffage (15) ;
une seconde vanne de commutation (33) qui sélectivement introduit l'eau de refroidissement provenant du radiateur de chauffage (15) soit dans le générateur de chaleur (21) en passant par un second tuyau de court-circuit (36) soit dans la chemise d'eau (11) en la renvoyant par un tuyau de retour d'eau de refroidissement (19) ;
ledit premier tuyau de court-circuit (35) partant de la première vanne de commutation (32) pour retourner dans le tuyau retour de dissipation de chaleur (27) entre la seconde vanne de commutation (33) et le tuyau de retour d'eau de refroidissement (19) ; et
ledit second tuyau de court-circuit (36) partant de la seconde vanne de commutation (33) pour retourner dans le tuyau aller de dissipation de chaleur (23) entre la première vanne de commutation (32) et le générateur de chaleur (21).

9. Un dispositif de chauffage pour véhicules selon l'une quelconque des revendications 6 à 8, dans lequel :
ledit dispositif comprend un moyen de détection de la température d'eau de refroidissement et une unité de commande (30) ;
ladite unité de commande (30) détermine si un commutateur de chauffage a été activé ou désactivé ;
si le commutateur de chauffage a été activé et si la température détectée par ledit moyen de détection de la température d'eau de refroidissement est inférieure à une valeur prédéterminée :
ladite unité de commande (30) commute les première et seconde vannes de commutation (32, 33) pour introduire l'eau de refroidissement dans les premier et second tuyaux de court-circuit (35, 36) et divise le circuit de chauffage d'eau de refroidissement (16) pour former le circuit côté moteur (34) et le circuit de contournement (10) ;
et si la température détectée par ledit moyen de détection de la température d'eau de refroidissement est supérieure à la valeur prédéterminée :
ladite unité de commande (30) commute la première vanne de commutation (32) pour introduire l'eau de refroidissement provenant de la chemise d'eau (11) dans le générateur de chaleur (21) et non dans le premier tuyau de court-circuit (35) et commute la seconde vanne de commutation (33) pour introduire l'eau derefroidissement provenant du radiateur de chauffage (15) dans le tuyau de retour d'eau de refroidissement (19) du circuit d'eau de refroidissement (14) et non dans le second tuyau de court-circuit (36) ;
ledit circuit côté moteur (34) comprend la chemise d'eau (11) du moteur, le tuyau aller de dissipation de chaleur (23), la première vanne de commutation (32), le premier tuyau de court-circuit (35), le tuyau retour de dissipation de chaleur (27), le tuyaù de retour d'eau de refroidissement (19) et la pompe à eau (13) ; et
ledit circuit de contournement (10) permet que l'eau de refroidissement circule du générateur de chaleur (21) par le radiateur de chauffage (15), le tuyau retour de dissipation de chaleur (27), la seconde vanne de commutation (33), le second tuyau de court-circuit (36) et le tuyau aller de dissipation de chaleur (23) pour retourner dans le générateur de chaleur (21).

10. Un dispositif de chauffage pour véhicules selon l'une quelconque des revendications précédentes dans lequel le générateur de chaleur produit de la chaleur en amenant un milieu visqueux à circuler et à ainsi générer de la chaleur.
